(19) Europäisches Patentamt
European Patent Office
Office européen des brevets

(11) EP 2 598 556 B1

(12) # EUROPÄISCHE PATENTSCHRIFT

(45) Veröffentlichungstag und Bekanntmachung des Hinweises auf die Patenterteilung:
**03.09.2014 Patentblatt 2014/36**

(21) Anmeldenummer: **11743478.7**

(22) Anmeldetag: **20.07.2011**

(51) Int Cl.:
***C08G 77/46*** (2006.01) ***C08G 77/445*** (2006.01)
***C08G 77/458*** (2006.01) ***C08G 18/71*** (2006.01)
***C08G 18/48*** (2006.01) ***C08G 18/28*** (2006.01)
***C08L 83/12*** (2006.01) ***C08G 77/26*** (2006.01)
***C08G 77/28*** (2006.01) ***C08G 18/67*** (2006.01)

(86) Internationale Anmeldenummer:
**PCT/EP2011/062460**

(87) Internationale Veröffentlichungsnummer:
**WO 2012/013558 (02.02.2012 Gazette 2012/05)**

(54) **VERFAHREN ZUR HERSTELLUNG VON SILOXAN-COPOLYMEREN MIT URETHANSULFONAMIDOVERBINDUNGSGRUPPEN**

PROCESS FOR PRODUCING SILOXANE COPOLYMERS WITH URETHANE-SULPHONAMIDO LINKING GROUPS

PROCÉDÉ DE PRODUCTION DE COPOLYMÈRES DE SILOXANE AVEC DES GROUPES DE TYPE URÉTHANE-SULFONAMIDE

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **27.07.2010 DE 102010038487**

(43) Veröffentlichungstag der Anmeldung:
**05.06.2013 Patentblatt 2013/23**

(73) Patentinhaber: **Wacker Chemie AG**
**81737 München (DE)**

(72) Erfinder:
- **HERZIG, Christian**
**83329 Waging (DE)**
- **SIVAC, Christine**
**84375 Kirchdorf (DE)**

(74) Vertreter: **Deffner-Lehner, Maria et al**
**Wacker Chemie AG**
**Zentralbereich Patente, Marken und Lizenzen**
**Hanns-Seidel-Platz 4**
**81737 München (DE)**

(56) Entgegenhaltungen:
**US-A- 3 562 352 US-A- 4 622 348**
**US-A- 5 221 724**

Anmerkung: Innerhalb von neun Monaten nach Bekanntmachung des Hinweises auf die Erteilung des europäischen Patents im Europäischen Patentblatt kann jedermann nach Maßgabe der Ausführungsordnung beim Europäischen Patentamt gegen dieses Patent Einspruch einlegen. Der Einspruch gilt erst als eingelegt, wenn die Einspruchsgebühr entrichtet worden ist. (Art. 99(1) Europäisches Patentübereinkommen).

EP 2 598 556 B1

## Beschreibung

Die Erfindung betriff ein Verfahren zur Herstellung von Si-C verknüpften Copolymeren aus organischen Polymeren und Organopolysiloxanen.

Zur Herstellung von SiC-verknüpften Copolymeren aus Siliconen und organischen Polymeren sind im wesentlichen drei Verfahren gebräuchlich: die Umsetzung von Siliconpolymeren, wie Polyethersiloxanen, mit Isocyanaten (PUR-Silicone), die Umsetzung von Epoxysiloxanen mit Polyaminen und die Hydrosilylierung von Allyloxypolymeren. Während für die ersten beiden Verfahren relativ teure Spezialrohstoffe erforderlich sind, braucht man im letzten Fall teure Edelmetallkatalysatoren.

Aus US 3,562,352 sind Polyetherurethan-Polydimethylsiloxan Block-Copolymere bekannt, die durch Umsetzung eines Polyetherurethans mit einem Acetatgruppen aufweisenden Polydimethylsiloxan hergestellt werden, wobei diese Kondensationsreaktion zeitintensiv über sechs bis zehn Stunden verläuft. Die so erhaltenen Block-Copolymere weisen eine Urethanverbindung zwischen dem Polyetherurethan-Block und Polydimethylsiloxan-Block auf, wobei das Polydimethylsiloxan direkt über eine Hydrolyse-instabile Si-N-Bindung und nicht über eine Hydrolyse-stabile Si-C-Bindung an die Urethangruppe gebunden ist.

In US 4,622,348 werden Beschleuniger für radikalisch polymerisierbare Zusammensetzungen beschrieben. Die Beschleuniger werden erhalten durch eine zweistufige Reaktion von Chlorsulfonylisocyanat, wobei zuerst die Isocyanatgruppe mit einer equivalenten Menge an Hydroxylgruppen aufweisender Verbindung und nachfolgend die Sulfonylchloridgruppe mit einer equivalenten Mengen eines primeren oder sekundären Amins reagiert. Dabei kann die Hydroxygruppen aufweisende Verbindung z.B. Propargylalkohol sein, der über eine Hydrosilylierungsreaktion an ein Silicon gebunden sein kann oder das primäre Amin kann ein Aminosilan sein und ein Polymer kann durch eine nachfolgende Kondensationspolymerisation oder Equilibrierung erhalten werden.

US 5,189,217 beschreibt als Stand der Technik eine andere Reaktivität des Chlorsulfonylisocyanats. So reagiert Chlorsulfonylisocyanat (CSI) mit einem Methansulfonylmethylamin (MMSA) zunächst auf der Sulfonseite und bildet in der Folge ein Methansulfonyl-N-methylaminosulfonylisocyanat (MSMASI). Die Isocyanatgruppe wird dann in einem zweiten Schritt mit einer Aminoverbindung, 2-Amino-4,6-dimethoxypyrimidin, umgesetzt.

Es bestand die Aufgabe ein Verfahren zur Herstellung von Si-C verknüpften Copolymeren aus organischen Polymeren und Organopolysiloxanen bereitzustellen, für das keine teuren Edelmetallkatalysatoren oder Spezialrohstoffe benötigt werden, das sogar ohne Einsatz von Katalysatoren schnell und vollständig abläuft, welches auf der Basis von frei verfügbaren Grundstoffen auch sehr ökonomisch durchführbar ist und bei dem stabile Copolymere erhalten werden.

Gegenstand der Erfindung ist ein Verfahren zur Herstellung von Siloxan-Copolymeren mit Urethansulfonamidoverbindungsgruppen indem
in einem ersten Schritt
ein mindestens eine Hydroxygruppe aufweisendes organisches Polymer (1)
mit Isocyanat (2) der Formel

$$O{=}C{=}N\text{-}SO_2X \qquad (I)$$

wobei

> X ein Halogenatom oder eine Pseudohalogenabgangsgruppe ist, umgesetzt wird,
> mit der Maßgabe, dass das Isocyanat in Mengen von 0,8 bis 1,0 Mol, vorzugsweise 1,0 Mol, O=C=N-Gruppe in (2) je Mol Hydroxygruppe (-OH) in (1) eingesetzt wird und
> in einem zweiten Schritt
> das aus dem ersten Schritt erhaltene mindestens eine Gruppe der Formel $-O-C(=O)-NH-SO_2X$ aufweisende organische Polymer (3) mit einem mindestens eine primäre oder sekundäre Aminogruppe (-NH-) aufweisenden Organopolysiloxan (4)
> umgesetzt wird,
> mit der Maßgabe, dass das Organopolysiloxan (4) in Mengen von 1,0 bis 20,0 Mol, vorzugsweise 1,2 bis 10,0 Mol, besonders bevorzugt 2,0 bis 4,0 Aminogruppe (-NH-) in (4) je Mol $-SO_2X$ im Isocyanat (2) eingesetzt wird.

Das in US 4,622,348 beschriebene Verfahren benötigt zusätzliche Hilfsbasen, wie Triethylamin, die im Überschuss zugesetzt werden müssen.

Das erfindungsgemäße Verfahren hat dagegen den Vorteil, dass keine zusätzlichen Hilfsbasen eingesetzt werden müssen. Ein Hilfsbasenzusatz ist nur erforderlich, wenn im Bereich 1,0 bis 2,0 Mol Amingruppe je Mol $-SO_2X$ gearbeitet wird, wobei dann aber dieser Hilfsbasenzusatz geringer ist.

Weiterhin werden erfindungsgemäß Siloxan-Copolymere mit Urethansulfonamidoverbindungsgruppen zwischen dem Siloxanpolymer und dem organischen Polymer erhalten, während die gemäß US 4,622,348 hergestellten

Chlorsulfonylisocyanataddukte keine Polymere oder Copolymere sind, sondern als Beschleuniger für radikalisch polymerisierbare Verbindungen dienen sollen.

Gemäß dem erfindungsgemäßen Verfahren werden als mindestens eine Hydroxygruppe aufweisendes organisches Polymer (1) vorzugsweise eine Verbindung der Formel

$$\text{Poly(-OH)}_r \qquad \text{(II)}$$

eingesetzt, wobei
r eine ganze Zahl von 1 bis 10, bevorzugt 1,2 oder 3, besonders bevorzugt 1 oder 2, ist, und
Poly ein- bis zehnwertiger, bevorzugt ein-, zwei- oder dreiwertiger, besonders bevorzugt ein- oder zweiwertiger, organischer Polymerrest ist, der vorzugsweise mindestens eine ΞC-O-CΞ oder -C(=O)-O-CΞ Gruppe enthält, bevorzugt ein Polyetherrest ist.

Bevorzugt ist das organische Polymer (1) eine Verbindung der Formel

$$R^1[(-B)_s\text{-OH}]_r \qquad \text{(III)},$$

wobei

B ein Rest der Formel $-O-(C=O)_p-R^5-$ ist
$R^1$ ein- bis zehnwertiger, bevorzugt ein-, zwei- oder dreiwertiger, besonders bevorzugt ein- oder zweiwertiger, Kohlenwasserstoffrest mit 1 bis 30 C-Atomen, vorzugsweise 1 bis 18 C-Atomen, ist,
$R^5$ ein linearer oder verzweigter $C_2$-$C_8$-Alkylenrest ist,
p 0 oder 1 ist, vorzugsweise 0 ist,
s eine ganze Zahl von 1 bis 100, vorzugsweise 8 bis 60, ist und r die oben dafür angegebene Bedeutung hat.

Beispiele für einwertige Kohlenwasserstoffreste $R^1$ mit 1 bis 18 C-Atomen sind Alkylreste, wie der Methyl-, Ethyl-, n-Propyl-, iso-Propyl-, 1-n-Butyl-, 2-n-Butyl-, iso-Butyl-, tert.-Butyl-, n-Pentyl-, iso-Pentyl-, neo-Pentyl-, tert.-Pentylrest, Hexylreste, wie der n-Hexylrest, Heptylreste, wie der n-Heptylrest, Octylreste, wie der n-Octylrest und iso-Octylreste, wie der 2,2,4-Trimethylpentylrest, Nonylreste, wie der n-Nonylrest, Decylreste, wie der n-Decylrest, Dodecylreste, wie der n-Dodecylrest, und Octadecylreste, wie der n-Octadecylrest; Cycloalkylreste, wie Cyclopentyl-, Cyclohexyl-, Cycloheptyl- und Methylcyclohexylreste; Alkenylreste, wie der Vinyl-, 5-Hexenyl-, Cyclohexenyl-, 1-Propenyl-, Allyl-, 3-Butenyl- und 4-Pentenylrest; Alkinylreste, wie der Ethinyl-, Propargyl- und 1-Propinylrest; Arylreste, wie der Phenyl-, Naphthyl-, Anthryl- und Phenanthrylrest; Alkarylreste, wie o-, m-, p-Tolylreste, Xylylreste und Ethylphenylreste; und Aralkylreste, wie der Benzylrest, der $\alpha$- und der $\beta$-Phenylethylrest.

Beispiele für zweiwertige Reste $R^1$ sind Reste der Formel

$-CH_2CH_2-$

$-CH_2CH(CH_3)-$

$-CH_2CH_2CH_2CH_2-$

$-CH_2CH_2CH_2CH_2CH_2CH_2-$

und Beispiele für drei- und vierwertige Reste $R^1$ sind Reste der Formel

$-CH_2(CH-)CH_2-$

$CH_3C(CH_2-)_3$

$C_2H_5C(CH_2-)_3$

$C(CH_2-)_4$.

Vorzugsweise ist B gleich einem ringgeöffneten Epoxyd oder Lacton mit 2 bis 8, vorzugsweise 2 bis 6, C-Atomen.

Beispiele für B sind Reste der Formel

$-OCH_2CH_2-$

$-OCH_2CH(CH_3)-$

$-OCH(CH_3)CH_2-$

$-OCH_2CH_2CH_2CH_2-$

$-OCH_2C(CH_3)_2-$

$-O(C{=}O) -CH_2CH_2CH_2-$

$-O (C{=}O) -CH_2CH_2CH_2CH_2-$

$-O (C{=}O) -CH_2CH_2CH_2CH_2CH_2-$

Bevorzugt sind Polyetherreste, die 1 bis 100 dieser Gruppen B enthalten, besonders bevorzugt 8 bis 60.

Das organische Polymer (1) enthält damit s x r dieser Gruppen. Bevorzugt enthalten die organischen Polymere (1) ein oder mehrere Oxyethylen-, Oxypropylen- oder Oxybutyleneinheiten oder Mischformen in blockmäßiger oder statistischer Anordnung.

Bevorzugt sind als organische Polymer (1) daher Polyether der Formel

$$R^6\text{-}[O\text{-}R^5]_s\text{-}O\text{-}H \qquad (IV),$$

besonders bevorzugt solche der Formel

$$R^6\text{-}[O\text{-}CH_2\text{-}CH(CH_3)]_x\text{-}[O\text{-}CH_2\text{-}CH_2]_y\text{-}O\text{-}H \qquad (V),$$

worin

- $R^5$ die oben dafür angegebene Bedeutung hat,
- $R^6$ ein Wasserstoffatom, ein Kohlenwasserstoffrest mit 1 bis 18 C-Atomen oder ein Rest der Formel $R^7$-C(O)- bedeutet, worin
- $R^7$ einen $C_1$-$C_{18}$-Alkylrest bedeutet,
- x eine ganze Zahl von 0 bis 100 und
- y eine ganze Zahl von 0 bis 100 hat,

mit der Maßgabe, dass das Polymer(1) mindestens eine Oxyalkylengruppe enthält.

Bevorzugt ist $R^6$ ein Wasserstoffatom oder ein Kohlenwasserstoffrest mit 1 bis 8 C-Atomen.

Die organischen Polymere (1) können entweder primäre, sekundäre oder tertiäre Carbinolenden haben. Entsprechend dem Index "r" sind sie bevorzugt mono-, di- oder trifunktionell, besonders bevorzugt mono- oder difunktionell. Die organischen Polymere (1) werden nach allgemein bekannten Verfahren hergestellt.

Bevorzugt als Rest X in der Verbindung (2) ist das Chloratom. Chlorsulfonylisocyanat (CSI) ist daher als Verbindung (2) bevorzugt.

Beispiele für Pseudohalogenreste in (2) sind solche der Formel -OCN, -SCN, $-N_3$.

Der erste Schritt des erfindungsgemäßen Verfahrens wird vorzugsweise bei 0 bis 50°C, bevorzugt 5 bis 30°C durchgeführt, um Nebenreaktionen zu vermeiden. Der erste Schritt des erfindungsgemäßen Verfahrens wird vorzugsweise beim Druck der umgebenden Atmosphäre, also bei 1020 hPa, durchgeführt, kann aber auch bei höheren oder niedrigeren Drücken erfolgen.

Die Umsetzung im erste Schritt des erfindungsgemäßen Verfahrens kann unverdünnt oder in Lösung erfolgen, wobei die Lösung wasserfrei sein muss. Beispiele für Lösungsmittel sind Ether, Glycolether, Ester oder Ketone.

Die eingesetzten organischen Polymere (1) haben vorzugsweise einen niedrigen Schmelzpunkt, bevorzugt einen Schmelzpunkt kleiner als 30°C, besonders bevorzugt kleiner als 10°C.

Im zweiten Schritt des erfindungsgemäßen Verfahrens wird das im ersten Schritt erhaltene organische Polymer (3), das mindestens eine Gruppe der Formel $-O-C(=O)-NH-SO_2X$ aufweist, vorzugsweise zum Organopolysiloxan (4), das mindestens eine primäre oder sekundäre Aminogruppe (-NH-) aufweist, zudosiert.

Vorzugsweise ist die primäre oder sekundäre Aminogruppe in (4) eine Si-C gebundene Gruppe A der allgemeinen Formel

$$-R^2-[NR^3-R^4-]_gNHR^3 \quad (VI),$$

wobei

$R^2$ ein zweiwertiger linearer oder verzweigter Kohlenwasserstoffrest mit 1 bis 18 Kohlenstoffatomen bedeutet,
$R^3$ ein Wasserstoffatom oder einen einwertigen Kohlenwasserstoffrest mit 1 bis 18 C-Atomen, vorzugsweise einen $C_1$-$C_4$-Alkylrest, oder einen Acylrest bedeutet, vorzugsweise ein Wasserstoffatom ist,
$R^4$ ein zweiwertiger Kohlenwasserstoffrest mit 1 bis 6 Kohlenstoffatomen bedeutet, und

g 0, 1, 2, 3 oder 4, vorzugsweise 0 oder 1, ist.

Vorzugsweise werden als Organopolysiloxane (4) solche aus Einheiten der allgemeine Formel

$$A_aR_b(R'O)_cSiO_{\frac{4-(a+b+c)}{2}} \quad (VII)$$

eingesetzt, wobei

Adie oben dafür angegebene Bedeutung hat,
Rein einwertiger Kohlenwasserstoffrest mit 1 bis 18 C-Atomen bedeutet,
R'ein Wasserstoffatom oder einen einwertigen Kohlenwasserstoffrest mit 1 bis 18 C-Atomen, vorzugsweise einen $C_1$-$C_4$-Alkylrest, bedeutet,
a0 oder 1 ist,
b0, 1, 2, oder 3 ist,
c0 oder 1 ist,
mit der Maßgabe, dass die Summe $a+b+c\leq3$ ist und dass die Organopolysiloxane mindestens einen Rest A je Molekül enthalten.

Bevorzugt werden als Organopolysiloxane (4) solche der allgemeinen Formel

$$A_kR^*_{3-k}SiO(R_2SiO)_m(AR^*SiO)_nSiR^*_{3-k}A_k \quad (VIII)$$

eingesetzt, wobei

R* R oder ein Rest der Formel -OR' bedeutet, wobei R und R' die oben dafür angegebene Bedeutung haben,
k 0 oder 1 ist,
m 0 oder eine ganze Zahl von 1 bis 1000 ist,
n 0 oder eine ganze Zahl von 1 bis 50 ist,

mit der Maßgabe, dass die Organopolysiloxane mindestens einen Rest A je Molekül enthalten.

Beispiele für einwertige Kohlenwasserstoffreste R mit 1 bis 18 C-Atomen sind Alkylreste, wie der Methyl-, Ethyl-, n-Propyl-, iso-Propyl-, 1-n-Butyl-, 2-n-Butyl-, iso-Butyl-, tert.-Butyl-, n-Pentyl-, iso-Pentyl-, neo-Pentyl-, tert.-Pentylrest, Hexylreste, wie der n-Hexylrest, Heptylreste, wie der n-Heptylrest, Octylreste, wie der n-Octylrest und iso-Octylreste, wie der 2,2,4-Trimethylpentylrest, Nonylreste, wie der n-Nonylrest, Decylreste, wie der n-Decylrest, Dodecylreste, wie der n-Dodecylrest, und Octadecylreste, wie der n-Octadecylrest; Cycloalkylreste, wie Cyclopentyl-, Cyclohexyl-, Cycloheptyl-und Methylcyclohexylreste; Alkenylreste, wie der Vinyl-, 5-Hexenyl-, Cyclohexenyl-, 1-Propenyl-, Allyl-, 3-Butenyl- und 4-Pentenylrest; Alkinylreste, wie der Ethinyl-, Propargyl- und 1-Propinylrest; Arylreste, wie der Phenyl-, Naphthyl-, Anthryl- und Phenanthrylrest; Alkarylreste, wie o-, m-, p-Tolylreste, Xylylreste und Ethylphenylreste; und Aralkylreste, wie der Benzylrest, der α- und der β-Phenylethylrest.

Bevorzugte Beispiele für Reste A sind Reste der Formeln

$H_2N(CH_2)_3$ -

$H_2N(CH_2)_2NH(CH_2)_3$-

$H_2N (CH_2)_2NH (CH_2) CH (CH_3) CH_2$-

(Cyclohexyl) NH $(CH_2)_3$-

$CH_3NH(CH_2)_3$-

$(CH_3)_2N(CH_2)_3$-

$CH_3CH_2NH(CH_2)_3$-

$(CH_3CH_2)_2N(CH_2)_3$-

$CH_3NH\ (CH_2)_2NH(CH_2)_3$-

$(CH_3)_2N(CH_2)_2NH(CH_2)_3$-

$CH_3CH_2NH\ (CH_2)_2NH(CH_2)_3$-

$(CH_3CH_2)\ _2N\ (CH_2)_2NH(CH_2)_3$-

und deren teilacetylierte Formen.

Besonders bevorzugte Beispiele für Reste A sind Reste der Formeln

$H_2N(CH_2)_3$ -

$H_2N(CH_2)_2NH(CH_2)_3$-

(Cyclohexyl)$NH(CH_2)_3$-

(Acetyl) -$NH(CH_2)_2NH(CH_2)_3$-

$H_2N\ (CH_2)_2N$ (Acetyl) $(CH_2)_3$-

Bevorzugt hat der Rest R* die Bedeutung von R.

Im zweiten Verfahrensschritt können organische und anorganische Hilfsbasen mitverwendet werden, um die entstehende Säure HX zu neutralisieren, was aber nicht bevorzugt ist. Bei Einsatz von Hilfsbasen sollten diese möglichst wenig nucleophil sein, um den Reaktionsablauf nicht zu behindern.

Die Organopolysiloxane (4) können zusätzlich zu den primären und sekundären Aminogruppen auch tertiäre Aminogruppen enthalten, die im zweiten Verfahrensschritt als Säurefänger dienen und dabei protoniert werden. Diese werden damit also nicht separat als monomere Verbindungen zugesetzt, sondern sind Bestandteil des Copolymers und bestimmen somit auch dessen physikalische Eigenschaften mit, wie Wasserlöslichkeit und Selbstdispergierbarkeit.

Der zweite Schritt des erfindungsgemäßen Verfahrens wird vorzugsweise bei einer Temperatur von 0° bis 80°C, bevorzugt bei 20° bis 50°C, durchgeführt und erfolgt vorzugsweise beim Druck der umgebenden Atmosphäre, also bei ca. 1020 hPa, kann aber auch bei höheren oder niedrigeren Drücken durchgeführt werden.

Beim erfindungsgemäßen Verfahren werden Siloxan-Copolymeren mit Urethansulfonamidoverbindungsgruppen erhalten.

Gegenstand der Erfindung sind daher Siloxan-Copolymere, die je Molekül mindestens eine Urethansulfonamidoverbindungsgruppe ausgewählt aus der Gruppe der Formeln

(Poly)-O-(C=O)-NH-$SO_2$-NH[-$R^4$-NZ]G-$R^2$- (SiΞ) (IX)

und

H-NH[-$R^4$-NZ]$_g$-$R^2$-(SiΞ) (TX')

und deren Mischungen (IX) und (IX')
enthalten, wobei

| | |
|---|---|
| Z | ein Rest der Formel -$SO_2$-NH-(C=O)-O-(Poly) ist oder einen Rest $R^3$ bedeutet, wobei wenn Z ein Rest $R^3$ ist, das N-Atom protoniert ist, |
| $R^2$, $R^3$ und $R^4$ | die oben dafür angegebene Bedeutung haben, |
| (SiΞ) | eine Verknüpfung über eine Si-C-Bindung zum Organopolysiloxan und |

(Poly) eine Verknüpfung zu einem organischen Polymerrest anzeigt.

Die erfindungsgemäßen Siloxan-Copolymere enthalten Urethansulfonamidoverbindungsgruppen der Formel (IX) und/oder (IX') vorzugsweise in Mengen von 0,2 bis 10 Gew.-%, bevorzugt 0,5 bis 5 Gew.-%, besonders bevorzugt in Mengen von 0,5 bis 2,0 Gew.-%, bezogen auf das Gesamtgewicht der Siloxan Copolymere.

Die erfindungsgemäßen Siloxan-Copolymere unterscheiden sich grundsätzlich von den in US 4,622,348 beschriebenen Chlorsulfonylisocyanataddukten, die als Beschleuniger für radikalisch polymerisierbare Verbindungen eingesetzt werden, durch die sehr viel geringere Menge an Urethansulfonamidoverbindungsgruppen.

Dadurch ergeben sich andere Eigenschaften bzw. Vorteile der erfindungsgemäßen Siloxan-Copolymere, wie dass diese Verbindungen flüssig und damit leichter verarbeitbar sind. Der Schwefelgehalt beträgt vorzugsweise weniger als 2 Gew.-%, bevorzugt weit weniger als 1 Gew.-%.

Die nach dem ersten Verfahrensschritt erhaltenen organischen Polymeren (3), die Gruppen der Formel $-O-C(=O)-NH-SO_2X$ aufweisen, enthalten Sulfonylgruppen, die sich im zweiten Verfahrensschritt sowohl mit den primären als auch den sekundären Aminogruppen in den Organopolysiloxanen (4) gleichermaßen umsetzen, was im Wesentlichen nach statistischen Gesetzmäßigkeiten abläuft. Die nicht sulfonierten Aminogruppen werden durch die entstehende Säure HX vorzugsweise protoniert und liegen dann als Ammoniumgruppe vor.

Die erfindungsgemäßen Siloxan-Copolymere weisen daher neben den Urethansulfonamidoverbindungsgruppen vorzugsweise je Molekül mindestens eine Si-C gebundene Ammoniumgruppe A' der Formel

$$-R^2-[N^{(+)}HR^3-R^4-]_gN^{(+)}H_2R^3\ 2*X^{(-)} \qquad (X)$$

auf, wobei

$R^2$, $R^3$, $R^4$, X und g die oben dafür angegebene Bedeutung haben.

Bevorzugte Urethansulfonamidoverbindungsgruppen ergeben sich durch den Einsatz der bevorzugten Aminoreste der Formel $H_2N-(CH_2)_3-$ und $H_2N-(CH_2)_2-HN-(CH_2)_3-$ und sind daher solche der Formel

(Poly) $-O-(C=0)-NH-SO_2-NH-(CH_2)_3-$ (SiΞ)

$$\text{(Poly)}-O-(C{=}O)-NH-SO_2-NH-(CH_2)_2-\overset{+}{N}H_2-(CH_2)_3-(\text{Si}\Xi)\ *\ X^-$$

$$\text{(Poly)}-O-(C{=}O)-NH-SO_2-NH-(CH_2)_2-\overset{\overset{\large Z}{|}}{N}-(CH_2)_3-(\text{Si}\Xi),$$

wobei Z, (SiΞ) und (Poly) die oben dafür angegebene Bedeutung haben.

Vorzugsweise ist die Urethansulfonamidoverbindungsgruppe über eine Siloxaneinheit der Formel $-SiR^*_dO_{(3-d)/2}$ an das Organopolysiloxan gebunden,

wobei d 0, 1 oder 2, vorzugsweise 1 oder 2, ist und R* die oben dafür angegebene Bedeutung hat.

Vorzugsweise ist der organische Polymerrest (Poly), an die die Urethansulfonamidoverbindungsgruppe gebunden ist, eine Polyethergruppe der Formel $-(O-R^5)_s-$, bevorzugt der Formel $-[O-CH_2-CH(CH_3)]_x-[O-CH_2-CH_2]_y-$, wobei $R^5$, s, x und y die oben dafür angegebene Bedeutung haben.

Diese Urethansulfonamidoverbindungsgruppe ist hochpolar und bildet starke Wasserstoff-Brücken-Wechselwirkungen aus. Deswegen kann es vorteilhaft sein, den Reaktionsprodukten Viskositätsregulierer zuzusetzen, sofern leicht fließfähige Copolymere erwünscht sind. Vorzugsweise können Carbinole, bevorzugt die niedermolekularen MeOH, EtOH, PrOH, i-PrOH, n-BuOH, i-BuOH, sowie deren niedere Alkoxylate zugegeben werden.

Die Molekulargewichte ($M_n$) der erfindungsgemäßen Siloxan-Copolymere liegen vorzugsweise im Bereich von 5.000 bis 1.000.000 Dalton, bevorzugt im Bereich von 10.000 bis 200.000 Dalton. Eine allgemeine Zuordnung von Viskositätsparametern zu $M_n$ ist nicht möglich, da die Viskosität stark von den eingesetzten organischen Polymeren (3) und Organopolysiloxanen (4) abhängt, insbesondere von der Anzahl der OH-Gruppen in (3) und der Aminogruppen (-NH-) in (4) abhängt, und damit auch von der Dichte der Urethansulfonamidoverbindungsgruppen zwischen dem organischen Polymer und dem Organopolysiloxan im Siloxan-Copolymer.

Gegenstand der Erfindung sind weiterhin Emulsionen enthaltend

(i) erfindungsgemäße Siloxan-Copolymeren mit Urethansulfonamidoverbindungsgruppen
(ii) gegebenenfalls Emulgatoren und
(iii) Wasser.

Die Herstellung der erfindungsgemäßen Emulsionen erfolgt durch Mischen, bevorzugt intensives Mischen von den Komponenten (i), (ii) und (iii).

Technologien zur Herstellung von Emulsionen von Organopolysiloxanen sind bekannt. So kann das intensive Mischen in Rotor-Stator-Rührvorrichtungen, Kolloidmühlen oder in Hochdruckhomogenisatoren erfolgen.

Bei den erfindungsgemäßen Emulsionen wird Wasser, in Mengen von vorzugsweise 80 bis 1000 Gew.-teile, besonders bevorzugt 100 bis 500 Gew.-teile, jeweils bezogen auf 100 Gew.-teile erfindungsgemäßen Siloxan-Copolymere (i), eingesetzt.

Als Emulgatoren (ii) können alle bisher bekannten, kationischen, anionischen und nicht-ionischen Emulgatoren sowohl einzeln als auch als Mischungen verschiedener Emulgatoren eingesetzt werden, mit denen auch bisher wässrige Emulsionen von Organopolysiloxanen hergestellt werden konnten.

Werden bei den erfindungsgemäßen Emulsionen Emulgatoren mitverwendet, werden sie in Mengen von vorzugsweise 5 bis 40 Gew.-teile, besonders bevorzugt 5 bis 20 Gew.-teile, jeweils bezogen auf 100 Gew.-teile erfindungsgemäßen Siloxan-Copolymere (i), eingesetzt.

Die erfindungsgemäßen Siloxan-Copolymere können, in Abhängigkeit von der gewählten Stöchiometrie wasserlöslich oder selbstemulgierend (sogenannte selbstemulgierende Systeme) eingestellt werden, d. h. sie erfordern für die Emulgierung keine weiteren Hilfsmittel. Die Siloxan-Copolymere können zur Behandlung von textilen Flächengebilden, Textilfasern und Leder, als Additive in Beschichtungen und Lacken, als Zusätze in kosmetischen Formulierungen und als oberflächenaktive Mittel verwendet werden. Sie weisen insbesondere hervorragende Eigenschaften als Textilweichmacher auf.

Beispiel 1:

340 g eines getrockneten statistischen Copolymers aus gleichmolaren Mengen Ethylenoxyd und Propylenoxyd mit einer OH-Zahl von 44,3 ($M_n$ = 2530; OH-Zahl von 56,1 bedeutet 1 mEquiv. OH / g Polyether, d.h. OH-Zahl von 44,3 bedeutet 0,79 mEquiv. OH / g Polyether) werden unter Schutzgas ($N_2$) vorgelegt und unter Kühlung mit 38,0 g Chlorsulfonylisocyanat umgesetzt. Das Verhältnis -OH / -NCO = 1,00. Die spontan exotherme Reaktion ist mit dem Ende der Dosierung von Chlorsulfonylisocyanat abgeschlossen. Die Säurezahl des gelblich klaren Produkts beträgt 80,82 (mg KOH/g). Das $^1$H-NMR zeigt kompletten Umsatz der Carbinolgruppen zum Chlorsulfonylurethan ($-O_2CNHSO_2Cl$).

42,7 g dieses Polyethers mit Chlorsulfonylurethan-Endgruppen werden in ca. 20 Minuten zu 100,0 g eines $\alpha,\omega$-Aminoethyl-aminopropyl-polydimethylsiloxans (verdünnt mit 35,7 g Isopropanol) mit einer Aminzahl von 0,758 dosiert. Das Einsatzverhältnis -NH- / $-SO_2Cl$ beträgt 2,50. Die spontan einsetzende exotherme Reaktion lässt die Innentemperatur um 9°K ansteigen, wobei auch starke Viskositätserhöhung erfolgt. Aus dem zunächst trüben Reaktionsgemisch erhält man eine hochviskose klare Lösung des Polyether-Siloxan-Copolymeres in Isopropanol (80%ig). Das Copolymer enthält rund 11 Gew.-% EO-und 15 Gew.-% PO-Gruppen. Die Aminogruppen des Siloxanrohstoffs werden zu 80% umgesetzt, d.h. zu gleichmolaren Teilen (40%) protoniert (mit der frei werdenden Säure HCl) bzw. in das Sulfonamid übergeführt. Im $^1$H-NMR ist die Abnahme der $N-CH_2$-Gruppen des Edukts zwischen 2,3 und 2,7 ppm auf 20% ihres ursprünglichen Wertes erkennbar.

50 g der Produktlösung werden zur einfacheren Handhabung mit 30 g Isopropanol auf eine 50%-ige Lösung verdünnt. Zur Herstellung einer Copolymeremulsion gibt man unter Rühren von Hand mit einem Spatel portionsweise insgesamt 53 g entsalztes Wasser zu. Man erhält eine sehr feinteilige Emulsion, die 30% des Polyether-Siloxan-Copolymeres enthält (pH = 5). Diese Emulsion ist wie auch die Verdünnung auf 2%-Copolymergehalt nach einer Woche bei Raumtemperatur unverändert.

Beispiel 2:

Wie in Beispiel 1 werden die identischen Rohstoffe miteinander umgesetzt, aber mit dem Unterschied, dass nur 26,7 g des Chlorsulfonylurethanpolyethers zu den 100 g des Aminosiloxans (verdünnt mit 31,7 g Isopropanol) dosiert werden. Aus diesen Einsatzmengen ergibt sich ein Einsatzverhältnis -NH- / $-SO_2Cl$ von 4,00. Die spontan exotherme Reaktion bewirkt einen Temperaturanstieg von 5°K bei erheblicher Viskositätserhöhung. Man erhält eine klare 80%-ige Lösung eines Polyether-Siloxan-Copolymers mit einem Gehalt von rund 8 Gew.-% EO- und 11 Gew.-% PO-Gruppen. Die Aminogruppen des Siloxans wurden zu 50% umgesetzt, 25% Sulfamidgruppen und 25% Ammoniumchloridgruppen gebildet. Das $^1$H-NMR zeigt die Reduktion der $N-CH_2$-Gruppen des Aminosiloxans (2,3 - 2,7 ppm) auf 50% ihres ursprünglichen Wertes.

Wie in Beispiel 1 kann aus 80 g einer 50%-igen Lösung in Isopropanol durch portionsweise Zugabe von 53 g Wasser eine stabile feinteilige Emulsion hergestellt werden (pH = 7).

Beispiel 3:

Aus 400 g eines getrockneten statistischen Allyloxyethoxylatsco-propoxylats (gleichmolar) mit einer OH-Zahl von 31,0 werden durch langsames Zudosieren von 31,3 g Chlorsulfonylisocyanat unter Kühlung 431,3 g eines Allylpolyetherchlorsulfonylurethans hergestellt. Die Säurezahl beträgt 56,92.

29,6 g dieses Allylpolyetherderivats werden mit 100 g eines üblichen Aminosiloxans bestehend aus Aminoethylaminopropylmethylsiloxy- und Dimethylsiloxyeinheiten und MeO/HO-Endgruppen (Me = Methylrest) mit einer Aminzahl von 0,305 und einer Viskosität von 1220 $mm^2/s$ (25°C) umgesetzt, in dem der Chlorsulfonylurethanpolyether in 20 Minuten zu einer Lösung des Aminosiloxans in 32,4 g Isopropanol dosiert wird. Das Einsatzverhältnis -NH- / $-SO_2Cl$ beträgt 2,00. Das Reaktionsgemisch erwärmt sich um ca. 5°K, womit ein erheblicher Viskositätsanstieg verbunden ist. Aus dem zunächst sehr trüben Reaktionsgemisch erhält man eine klare 80%-ige Lösung eines Polyether-Siloxan-Copolymers, das ca. 9 Gew.-% EO- und 13 Gew.-% PO-Gruppen enthält. Die Aminogruppen des Siloxans wurden vollständig umgesetzt in 50% Sulfamidgruppen und 50% Ammoniumchloridgruppen, was im $^1H$-NMR am Fehlen der Signale für die $N-CH_2$-Gruppen (2,3 - 2,7 ppm) ersichtlich ist.

Aus 50 g dieser Copolymerlösung wird durch Einmischen von 7,1 g Isopropanol eine 70%-ige Lösung hergestellt. Durch das portionsweise Einrühren von insgesamt 76,2 g entsalztem Wasser erhält man eine sehr feinteilige stabile Emulsion.

Beispiel 4:

100 g des Aminosiloxans aus Beispiel 1 werden mit 40,9 g Isopropanol verdünnt. Bei Raumtemperatur wird ein Gemisch aus 26,7 g des Chlorsulfonylurethanpolyethers aus Beispiel 1 und 36,9 g des Chlorsulfonylurethanpolyethers aus Beispiel 3 zudosiert. Das Einsatzverhältnis -NH- / $-SO_2Cl$ beträgt 2,00. Während der Dosierzeit von 30 Minuten steigt die Innentemperatur um ca. 8°K, mit deutlich erkennbarem Viskositätsanstieg. Man erhält eine 80%-ige Emulsion des Polyether-Siloxan-Copolymeres in Isopropanol welches rund 15 Gew.-% EO- und 20 Gew.-% PO-Gruppen enthält. Die Aminogruppen des Siloxans sind vollständig umgesetzt in 50% Sulfamidgruppen und 50% Ammoniumchloridgruppen, was einer Aminzahl von 0,23 des Copolymers entspricht.

Das Reaktionsprodukt wird mit Isopropanol auf 50% weiter verdünnt. Durch das portionsweise Einrühren von insgesamt 53 g Wasser in 80 g dieser Lösung erhält man problemlos eine sehr feinteilige Emulsion mit 30 Gew.-% Copolymergehalt.

**Patentansprüche**

1. Verfahren zur Herstellung von Siloxan-Copolymeren mit Urethansulfonamidoverbindungsgruppen indem
in einem ersten Schritt
ein mindestens eine Hydroxygruppe aufweisendes organisches Polymer (1)
mit Isocyanat (2) der Formel

$$O=C=N-SO_2X \qquad (I)$$

wobei
X ein Halogenatom oder eine Pseudohalogenrest ist, umgesetzt wird,
mit der Maßgabe, dass das Isocyanat in Mengen von 0,8 bis 1,0 Mol, vorzugsweise 1,0 Mol, O=C=N-Gruppe in (2) je Mol Hydroxygruppe (-OH) in (1) eingesetzt wird und
in einem zweiten Schritt
das aus dem ersten Schritt erhaltene mindestens eine Gruppe der Formel $-O-C(=O)-NH-SO_2X$ aufweisende organische Polymer (3) mit einem mindestens eine primäre oder sekundäre Aminogruppe (-NH-) aufweisenden Organopolysiloxan (4) umgesetzt wird,
mit der Maßgabe, dass das Organopolysiloxan (4) in Mengen von 1,2 bis 4,0 Mol, vorzugsweise 2,0 bis 3,0 Mol, Aminogruppe (-NH-) in (4) je Mol $-SO_2X$ im Isocyanat (2) eingesetzt wird.

2. Verfahren nach Anspruch 1, **dadurch gekennzeichnet, dass** als organisches Polymer (1) solches der allgemeinen Formel

$$R^1[(-B)_s-OH]_r \qquad (III)$$

eingesetzt wird, wobei

B ein Rest der Formel $-O-(C=O)_p-R^5-$ ist,
$R^1$ ein- bis zehnwertiger, bevorzugt ein-, zwei- oder dreiwertiger, besonders bevorzugt ein- bis zweiwertiger, Kohlenwasserstoffrest mit 1 bis 30 C-Atomen, vorzugsweise 1 bis 18 C-Atomen, ist,
$R^5$ ein linearer oder verzweigter $C_2$-$C_8$-Alkylenrest ist,
p 0 oder 1 ist, vorzugsweise 0 ist,
r eine ganze Zahl von 1 bis 10, vorzugsweise 1, 2 oder 3, bevorzugt 1 oder 2, ist und
s eine ganze Zahl von 1 bis 100, vorzugsweise 8 bis 60, ist.

3. Verfahren nach Anspruch 1 oder 2, **dadurch gekennzeichnet, dass** als organisches Polymer (1) ein Polyether der allgemeinen Formel

$$R^6-[O-CH_2-CH(CH_3)]_x-[O-CH_2-CH_2]_y-O-H \qquad (V)$$

eingesetzt wird, worin

$R^6$ ein Wasserstoffatom, ein Kohlenwasserstoffrest mit 1 bis 18 C-Atomen oder ein Rest der Formel $R^7$-C(O)- bedeutet,
$R^7$ einen $C_1$-$C_{18}$-Alkylrest bedeutet,
x eine ganze Zahl von 0 bis 100 ist und
y eine ganze Zahl von 0 bis 100 ist,

mit der Maßgabe, dass das Polymer (1) mindestens eine Oxyalkylengruppe enthält.

4. Verfahren nach Anspruch 1, 2 oder 3, **dadurch gekennzeichnet, dass** als Organopolysiloxan (4) solches aus Einheiten der allgemeinen Formel

$$A_aR_b(R'O)_cSiO_{\frac{4-(a+b+c)}{2}} \qquad (VII)$$

eingesetzt wird, wobei

A ein Si-C gebundener Rest der Formel

$$-R^2-[NR^3-R^4-]_gNHR^3 \qquad (VI)$$

ist,
R ein einwertiger Kohlenwasserstoffrest mit 1 bis 18 C-Atomen bedeutet,
R' ein Wasserstoffatom oder einen einwertigen Kohlenwasserstoffrest mit 1 bis 18 C-Atomen, vorzugsweise einen $C_1$-$C_4$-Alkylrest, bedeutet,
$R^2$ ein zweiwertiger linearer oder verzweigter Kohlenwasserstoffrest mit 1 bis 18 Kohlenstoffatomen bedeutet,
$R^3$ ein Wasserstoffatom oder einen einwertigen Kohlenwasserstoffrest mit 1 bis 18 C-Atomen, vorzugsweise einen $C_1$-$C_4$-Alkylrest, oder einen Acylrest bedeutet, vorzugsweise ein Wasserstoffatom ist,
$R^4$ ein zweiwertiger Kohlenwasserstoffrest mit 1 bis 6 Kohlenstoffatomen bedeutet,
a 0 oder 1 ist,
b 0, 1, 2, oder 3 ist,
c 0 oder 1 ist,
g 0, 1, 2, 3 oder 4, vorzugsweise 0 oder 1, ist,
mit der Maßgabe, dass die Summe $a+b+c \leq 3$ ist, und
dass die Organopolysiloxane mindestens einen Rest A je Molekül enthalten.

5. Verfahren nach einem der Ansprüche 1 bis 4, **dadurch gekennzeichnet, dass** als Organopolysiloxan (4) solches der allegemeinen Formel

$A_kR^*_{3-k}SiO\ (R_2SiO)_m\ (AR^*SiO)_nSiR^*_{3-k}A_k$ (VIII) eingesetzt wird, wobei

A die im Anspruch 4 dafür angegebene Bedeutung hat,

$R^*$ R oder ein Rest der Formel -OR' bedeutet, wobei R und R' die im Anspruch 4 dafür angegebene Bedeutung haben,
k 0 oder 1 ist,
m 0 oder eine ganze Zahl von 1 bis 1000 ist,
n 0 oder eine ganze Zahl von 1 bis 50 ist,

mit der Maßgabe, dass die Organopolysiloxane mindestens einen Rest A je Molekül enthalten.

**6.** Siloxan-Copolymere, die je Molekül mindestens eine Urethansulfonamidoverbindungsgruppe ausgewählt aus der Gruppe der Formeln

$$(Poly)\text{-O-}(C{=}O)\text{-NH-}SO_2\text{-NH}[\text{-}R^4\text{-NZ}]_g\text{-}R^2\text{-}(Si\Xi) \quad (IX)$$

$$H\text{-NH}[\text{-}R^4\text{-NZ}]_g\text{-}R^2\text{-}(Si{=}) \quad (IX')$$

und deren Mischungen (IX) und (IX')
enthalten, wobei

Z ein Rest der Formel $-SO_2$-NH-(C=O)-O-(Poly) ist oder einen Rest $R^3$ bedeutet,
wobei wenn Z ein Rest $R^3$ ist, das N-Atom protoniert ist,
$R^2$, $R^3$ und $R^4$ die im Anspruch 4 dafür angegebene Bedeutung haben,
(SiΞ) eine Verknüpfung über eine Si-C-Bindung zum Organopolysiloxan und
(Poly) eine Verknüpfung zu einem organischen Polymerrest anzeigt.

**7.** Siloxan-Copolymere nach Anspruch 6, **dadurch gekennzeichnet, dass** sie 0,2 bis 10 Gew.-% Urethansulfonamidoverbindungsgruppen der Formeln (IX) und/oder (IX'), bezogen auf das Gesamtgewicht der Siloxan-Copolymere, enthalten.

**8.** Siloxan-Copolymere nach Anspruch 6 oder 7, **dadurch gekennzeichnet, dass** sie zusätzlich zu den Urethansulfonamidoverbindungsgruppen der Formeln (IX) und/oder (IX') je Molekül mindestens eine Si-C gebundene Ammoniumgruppe A' der Formel

$$-R^2\text{-}[N^{(+)}HR^3\text{-}R^4\text{-}]_g N^{(+)}H_2R^3 \; 2{*}X^{(-)} \quad (X)$$

enthalten, wobei
$R^2$, $R^3$, $R^4$ und g die im Anspruch 4 dafür angegebene Bedeutung haben und
X die im Anspruch 1 dafür angegebene Bedeutung hat..

**9.** Emulsionen enthaltend

(i) Siloxan-Copolymere mit Urethansulfonamidoverbindungsgruppen nach Anspruch 6, 7 oder 8 oder hergestellt nach einem der Ansprüche 1 bis 5,
(ii) gegebenenfalls Emulgatoren und
(iii) Wasser.

## Claims

**1.** Process for producing siloxane copolymers having urethanesulfonamido binding groups by
a first step of reacting
an organic polymer (1), which has at least one hydroxyl group,
with isocyanate (2) of the formula

$$O{=}C{=}N\text{-}SO_2X \quad (I)$$

where
X is a halogen atom or a pseudohalogen radical,
with the proviso that the isocyanate is used in amounts of 0.8 to 1.0 mol, preferably 1.0 mol, of O=C=N- group in

(2) per mole of hydroxyl group (-OH) in (1), and
a second step of reacting
the organic polymer (3), which is obtained from the first step and has at least one group of the formula -O-C(=O)-NH-$SO_2X$, with an organopolysiloxane (4), which has at least one primary or secondary amino group (-NH-),
with the proviso that said organopolysiloxane (4) is used in amounts of 1.2 to 4.0 mol, preferably 2.0 to 3.0 mol, of amino group (-NH-) in (4) per mole of -$SO_2X$ in isocyanate (2).

2. Process according to Claim 1, **characterized in that** said organic polymer (1) has the general formula

$$R^1[(-B)_s\text{-OH}]_r \qquad \text{(III)}$$

where

B is a radical of the formula -O-(C=O)$_p$-$R^5$-,
$R^1$ is a mono- to decavalent, preferably mono-, di- or trivalent and more preferably a mono- to divalent hydrocarbon radical of 1 to 30 carbon atoms, preferably 1 to 18 carbon atoms,
$R^5$ is a linear or branched $C_2$-$C_8$-alkylene radical,
p is 0 or 1, preferably 0,
r is an integer from 1 to 10, preferably 1, 2 or 3 and more preferably 1 or 2, and
s is an integer from 1 to 100, preferably 8 to 60.

3. Process according to Claim 1 or 2, **characterized in that** said organic polymer (1) is a polyether of the general formula

$$R^6\text{-}[O\text{-}CH_2\text{-}CH(CH_3)]_x\text{-}[O\text{-}CH_2\text{-}CH_2]_y\text{-}O\text{-}H \qquad \text{(V)}$$

where

$R^6$ is a hydrogen atom, a hydrocarbon radical of 1 to 18 carbon atoms or a radical of the formula $R^7$-C(O)-,
$R^7$ is a $C_1$-$C_{18}$-alkyl radical,
x is an integer from 0 to 100, and
y is an integer from 0 to 100,

with the proviso that said polymer (1) contains at least one oxyalkylene group.

4. Process according to Claim 1, 2 or 3, **characterized in that** the organopolysiloxane used as organopolysiloxane (4) is composed of units of the general formula

$$A_aR_b(R'O)_cSiO_{\frac{4-(a+b+c)}{2}} \qquad \text{(VII)}$$

where

A is an Si-C-bound radical of the formula

$$-R^2\text{-}[NR^3\text{-}R^4\text{-}]_gNHR^3 \qquad \text{(VI)},$$

R is a monovalent hydrocarbon radical with 1 to 18 carbon atoms,
R' is a hydrogen atom or a monovalent hydrocarbon radical having 1 to 18 carbon atoms, preferably a $C_1$-$C_4$-alkyl radical,
$R^2$ is a divalent linear or branched hydrocarbon radical of 1 to 18 carbon atoms,
$R^3$ is a hydrogen atom or a monovalent hydrocarbon radical of 1 to 18 carbon atoms, preferably a $C_1$-$C_4$-alkyl radical, or an acyl radical, preferably a hydrogen atom,
$R^4$ is a divalent hydrocarbon radical of 1 to 6 carbon atoms,
a is 0 or 1,
b is 0, 1, 2 or 3,
c is 0 or 1,

g is 0, 1, 2, 3 or 4, preferably 0 or 1,
with the proviso that the sum a+b+c is ≤3, and **in that** the organopolysiloxanes contain at least one A radical per molecule.

**5.** Process according to any of Claims 1 to 4, **characterized in that** said organopolysiloxane (4) has the general formula

$$A_kR^*_{3-k}SiO\ (R_2SiO)\ _m(AR^*SiO)_nSiR^*_{3-k}A_k \qquad (VIII)$$

where

A is as defined in Claim 4,
R* is R or a radical of formula -OR', where R and R' are each as defined in Claim 4,
k is 0 or 1,
m is 0 or an integer from 1 to 1000,
n is 0 or an integer from 1 to 50,

with the proviso that the organopolysiloxanes contain at least one A radical per molecule.

**6.** Siloxane copolymers containing per molecule at least one urethanesulfonamido binding group selected from the group of formulae

$$(Poly)\text{-}O\text{-}(C{=}O)\ \text{-}NH\text{-}SO_2\text{-}NH[\text{-}R^4\text{-}NZ]_g\text{-}R^2\text{-}\ (Si{=}) \qquad (IX)$$

$$H\text{-}NH[\text{-}R^4\text{-}NZ]_g\text{-}R^2\text{-}(Si{\equiv}) \qquad (IX')$$

and their mixtures (IX) and (IX'),
where

Z is a radical of the formula $-SO_2-NH-(C=O)-O-(Poly)$ or is an $R^3$ radical,
where when Z is an $R^3$ radical, the N-atom is protonated,
$R^2$, $R^3$ and $R^4$ are each as defined in Claim 4,
(Si≡) is a link to the organopolysiloxane via an Si-C bond, and
(Poly) is a link to an organic polymer-derived radical.

**7.** Siloxane copolymers according to Claim 6, **characterized in that** they contain from 0.2 to 10 wt% of urethanesulfonamido binding groups of formulae (IX) and/or (IX'), based on the total weight of siloxane copolymers.

**8.** Siloxane copolymers according to Claim 6 or 7, **characterized in that** in addition to the urethanesulfonamido binding groups of formulae (IX) and/or (IX') they contain per molecule at least one Si-C-bound ammonium group A' of the formula

$$\text{-}R^2\text{-}[N^{(+)}HR^3\text{-}R^4\text{-}]_gN^{(+)}H_2R^3\ 2\ {*}\ X^{(-)} \qquad (X)$$

where
$R^2$, $R^3$, $R^4$ and g are each as defined in Claim 4, and
X is as defined in Claim 1.

**9.** Emulsions containing

(i) siloxane copolymers with
urethanesulfonamido binding groups according to Claim 6, 7 or 8 or obtained according to any of Claims 1 to 5,
(ii) optionally emulsifiers, and
(iii)water.

**Revendications**

**1.** Procédé de fabrication de copolymères de siloxane contenant des groupes de liaison uréthane-sulfonamido, selon

lequel
lors d'une première étape,
un polymère organique comprenant au moins un groupe hydroxy (1) est mis en réaction avec un isocyanate (2) de formule

$$O{=}C{=}N\text{-}SO_2X \qquad \text{(I)}$$

dans laquelle
X représente un atome d'halogène ou un radical pseudohalogène,
à condition que l'isocyanate soit utilisé en quantités de 0,8 à 1,0 mole, de préférence de 1,0 moles, de groupe O=C=N dans (2) par mole de groupe hydroxy (-OH) dans (1), et
lors d'une seconde étape,
le polymère organique (3) comprenant au moins un groupe de formule $-O-C(=O)-NH-SO_2X$ obtenu lors de la première étape est mis en réaction avec un organopolysiloxane (4) comprenant au moins un groupe amino primaire ou secondaire (-NH-),
à condition que l'organopolysiloxane (4) soit utilisé en quantités de 1,2 à 4,0 moles, de préférence de 2,0 à 3,0 moles, de groupe amino (-NH-) dans (4) par mole de $-SO_2X$ dans l'isocyanate (2).

2. Procédé selon la revendication 1, **caractérisé en ce qu'**un polymère de formule générale

$$R^1[(\text{-}B)s\text{-}OH]_r \qquad \text{(III)}$$

est utilisé en tant que polymère organique (1), dans laquelle
B représente un radical de formule $-O-(C=O)_p-R^5-$,
$R^1$ représente un radical hydrocarboné mono- à décavalent, de préférence mono-, bi- ou trivalent, de manière particulièrement préférée mono- à bivalent, contenant 1 à 30 atomes C, de préférence 1 à 18 atomes C,
$R^5$ représente un radical alkylène en $C_2$-$C_8$ linéaire ou ramifié,
p représente 0 ou 1, de préférence 0,
r représente un nombre entier de 1 à 10, de préférence 1, 2 ou 3, de préférence 1 ou 2, et
s représente un nombre entier de 1 à 100, de préférence de 8 à 60.

3. Procédé selon la revendication 1 ou 2, **caractérisé en ce qu'**un polyéther de formule générale

$$R^6\text{-}[O\text{-}CH_2\text{-}CH(CH_3)]_x\text{-}[O\text{-}CH_2\text{-}CH_2]_y\text{-}O\text{-}H \qquad \text{(V)}$$

est utilisé en tant que polymère organique (1), dans laquelle
$R^6$ signifie un atome d'hydrogène, un radical hydrocarboné de 1 à 18 atomes C ou un radical de formule $R^7$-C(O)-,
$R^7$ signifie un radical alkyle en $C_1$-$C_{18}$,
x représente un nombre entier de 0 à 100, et
y représente un nombre entier de 0 à 100,
à condition que le polymère (1) contienne au moins un groupe oxyalkylène.

4. Procédé selon la revendication 1, 2 ou 3, **caractérisé en ce qu'**un organopolysiloxane constitué d'unités de formule générale

$$A_aR_b(R'O)_cSiO_{\frac{4-(a+b+c)}{2}} \qquad \text{(VII)}$$

est utilisé en tant qu'organopolysiloxane (4), dans laquelle
A représente un radical relié à Si-C de formule

$$-R^2\text{-}[NR^3\text{-}R^4\text{-}]_gNHR^3 \qquad \text{(VI)},$$

R signifie un radical hydrocarboné monovalent de 1 à 18 atomes C,
R' signifie un atome d'hydrogène ou un radical hydrocarboné monovalent de 1 à 18 atomes C, de préférence un radical alkyle en $C_1$-$C_4$,
$R^2$ signifie un radical hydrocarboné bivalent linéaire ou ramifié de 1 à 18 atomes de carbone,

$R^3$ signifie un atome d'hydrogène ou un radical hydrocarboné monovalent de 1 à 18 atomes C, de préférence un radical alkyle en $C_1$-$C_4$, ou un radical acyle, de préférence un atome d'hydrogène,
$R^4$ signifie un radical hydrocarboné bivalent de 1 à 6 atomes de carbone,
a signifie 0 ou 1,
b signifie 0, 1, 2 ou 3,
c signifie 0 ou 1,
g signifie 0, 1, 2, 3 ou 4, de préférence 0 ou 1,
à condition que la somme $a+b+c \leq 3$, et que les organopolysiloxanes contiennent au moins un radical A par molécule.

5. Procédé selon l'une quelconque des revendications 1 à 4, **caractérisé en ce qu'**un organopolysiloxane de formule générale

$$A_kR^*_{3-k}SiO\ (R_2SiO)\ _m(AR^*SiO)\ _nSiR^*_{3-k}A_k \qquad (VIII)$$

est utilisé en tant qu'organopolysiloxane (4), dans laquelle
A a la signification indiquée dans la revendication 4,
R* signifie R ou un radical de formule -OR', R et R' ayant la signification indiquée dans la revendication 4,
k signifie 0 ou 1,
m signifie 0 ou un nombre entier de 1 à 1 000,
n signifie 0 ou un nombre entier de 1 à 50,
à condition que les organopolysiloxanes contiennent au moins un radical A par molécule.

6. Copolymères de siloxane, qui contiennent par molécule au moins un groupe de liaison uréthane-sulfonamido, choisi dans le groupe des formules

$$(poly)\text{-}O\text{-}(C{=}O)\ \text{-}NH\text{-}SO_2\text{-}NH[\text{-}R^4\text{-}NZ]_g\text{-}R^2\text{-}\ (Si\equiv) \qquad (IX)$$

$$H\text{-}NH[\text{-}R^4\text{-}NZ]_g\text{-}R^2\text{-}(Si\equiv) \qquad (IX')$$

et leurs mélanges (IX) et (IX'),
dans lesquelles
Z signifie un radical de formule $-SO_2-NH-(C=O)-O-(poly)$ ou un radical $R^3$,
l'atome N étant protoné lorsque Z signifie un radical $R^3$,
$R^2$, $R^3$ et $R^4$ ont la signification indiquée dans la revendication 4,
(Si=) signifie une connexion par une liaison Si-C à l'organopolysiloxane, et
(poly) désigne une connexion à un radical polymère organique.

7. Copolymères de siloxane selon la revendication 6, **caractérisés en ce qu'**ils contiennent 0,2 à 10 % en poids de groupes de liaison uréthane-sulfonamido des formules (IX) et/ou (IX'), par rapport au poids total des copolymères de siloxane.

8. Copolymères de siloxane selon la revendications 6 ou 7, **caractérisés en ce qu'**ils contiennent, en plus des groupes de liaison uréthane-sulfonamido des formules (IX) et/ou (IX'), au moins un groupe ammonium A' relié à Si-C par molécule de formule

$$\text{-}R^2\text{-}\ [N^{(+)}HR^3\text{-}R^4\text{-}]_gN^{(+)}H_2R^3\ 2{*}X^{(-)} \qquad (X)$$

dans laquelle
$R^2$, $R^3$, $R^4$ et g ont la signification indiquée dans la revendication 4, et
X a la signification indiquée dans la revendication 1.

9. Émulsions, contenant

(i) des copolymères de siloxane contenant des groupes de liaison uréthane-sulfonamido selon la revendication 6, 7 ou 8, ou fabriqués selon l'une quelconque des revendications 1 à 5,
(ii) éventuellement des émulsifiants, et
(iii) de l'eau.

## IN DER BESCHREIBUNG AUFGEFÜHRTE DOKUMENTE

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

### In der Beschreibung aufgeführte Patentdokumente


- US 3562352 A
- US 4622348 A
- US 5189217 A